Europäisches Patentamt

European Patent Office

Office européen des brevets

(19)

(11) Veröffentlichungsnummer: **0 049 903**
B1

(12) # EUROPÄISCHE PATENTSCHRIFT

(45) Veröffentlichungstag der Patentschrift:
23.01.85

(51) Int. Cl.⁴: **F 16 H 25/22**

(21) Anmeldenummer: 81108285.8

(22) Anmeldetag: 13.10.81

(54) Schraubtrieb mit Doppelmutter.

(30) Priorität: 14.10.80 DE 3038774

(43) Veröffentlichungstag der Anmeldung:
21.04.82 Patentblatt 82/16

(45) Bekanntmachung des Hinweises auf die Patenterteilung:
23.01.85 Patentblatt 85/4

(84) Benannte Vertragsstaaten:
CH DE FR GB IT LI

(56) Entgegenhaltungen:
CH - A - 464 614
CH - A - 547 454
DE - A - 1 936 546
DE - A - 2 349 958
DE - A - 2 940 762
DE - B - 2 453 635
GB - A - 1 471 711
SU - A - 700 728
US - A - 2 933 941

(73) Patentinhaber: Deutsche Star Kugelhalter GmbH,
Ernst-Sachs-Strasse 90, D-8720 Schweinfurt 2 (DE)

(72) Erfinder: Albert, Ernst, Johannissteig 9,
D-8729 Sand/Main (DE)
Erfinder: Altrock, Horst, Akazienweg 54,
D-8721 Dittelbrunn (DE)

(74) Vertreter: Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)

## Beschreibung

Die Erfindung betrifft einen Schraubtrieb mit Doppelmutter, insbesondere Kugelschraubtrieb, mit einer Gewindespindel und einer auf der Gewindespindel laufenden Doppelmutter, deren beide Einzelmuttern zur Einstellung eines gewünschten Spiels bzw. einer gewünschten Vorspannung auf der Gewindespindel gegeneinander kontinuierlich verdrehbar und zur Verhinderung einer selbsttätigen gegenseitigen Verdrehung über wenigstens einen an einer Umfangsfläche der einen und/oder der anderen Einzelmutter unter radialer Vorspannung anliegenden Zwischenring miteinander reibungskraftschlüssig verbunden sind.

Bei einem aus der DE-A-2 349 958 bekannten Schraubtrieb dieser Art sind die Einzelmuttern mittels eines geschlossenen Zwischenrings verbunden, der am Außenumfang jeweils eines durchmesserverringerten Endabschnitts beider Einzelmuttern mit Preßpassung anliegt; der Außendurchmesser des Zwischenrings entspricht dem Durchmesser der sich in axialer Richtung an den Zwischenring anschließenden Abschnitte der Einzelmuttern. Zur Einstellung eines vorgegebenen Spiels bzw. Vorspannung wird die Preßpassung zwischen dem Zwischenring und einer der Einzelmuttern gelöst und zwar dadurch, daß in eine Außenumfangsnut dieser Einzelmutter unterhalb des Zwischenrings durch eine Öffnung des Zwischenrings hindurch Drucköl eingeleitet wird, was ein Abheben des Zwischenrings von der Einzelmutter zur Folge hat. Bei andauernder Druckölzufuhr können beide Einzelmuttern gegeneinander kontinuierlich verdreht werden. Nach erfolgter Einstellung wird die Druckölzufuhr beendet und so die Preßpassung wieder hergestellt. Aus der DE-A-2 349 958 ist es weiterhin bekannt, die beiden Einzelmuttern mittels eines geschlossenen Zwischenrings ebenfalls unter Preßpassung miteinander drehfest zu verbinden, jedoch ohne die Möglichkeit der Lösung der Preßpassung mittels Druckölzufuhr (Seite 3, 2. und 3. Absatz). Es besteht daher praktisch keine Möglichkeit der Änderung bzw. der Nachjustierung einer einmal eingestellten Vorspannung der Einzelmuttern, zumal dann, wenn aufgrund wechselnder Betriebstemperaturen ein besonders hoher Preßpassungsdruck gewählt werden muß. Besonders nachteilig ist, daß die Preßpassung eine hohe Fertigungsgenauigkeit erfordern. Aus der DE-A-2 349 958 ist weiterhin ein geschlitzer Zwischenring bekannt, dessen Durchmesser zur Herstellung eines Preßsitzes auf beiden Einzelmutterenden mittels einer tangentialen Schraube verändert werden kann. Zur Aufnahme dieser Schraube muß der Zwischenring relativ dick ausgebildet sein, so daß der Zwischenring über die beiden Einzelmuttern hinaus in radialer Richtung vorsteht; auch ist die Herstellung dieses Zwischenrings relativ aufwendig.

Demgegenüber ist es Aufgabe der Erfindung einen Schraubtrieb der eingangs genannten Art bereitzustellen, der, unter Beibehaltung der kontinuierlichen Einstellmöglichkeit von Spiel bzw. Vorspannung und ohne zusätzlichen radialen Raumbedarf für die Verbindung zwischen beiden Einzelmuttern, kostengünstig herstellbar ist und eine gegebenenfalls wiederholte Einstellung von Spiel und Vorspannung mit einfachen Werkzeugen erlaubt.

Diese Aufgabe wird erfindungsgemäß dadurch gelöst, daß der Zwischenring als gewellter Toleranzring mit federnd nachgiebiger radialer Ringstärke ausgebildet und in einem Ringraum radial eingespannt ist, der in radialer Richtung von Umfangsflächen der Einzelmuttern allein oder von Umfangsflächen der Einzelmuttern und eines zwischen diesen angeordneten Stützrings begrenzt ist.

Aufgrund der federnd nachgiebigen Ringstärke des gewellten Toleranzringes sind die Genauigkeitsanforderungen an die den Ringraum radial begrenzenden Umfangsflächen relativ gering. Der Toleranzring selbst ist kostengünstig erhältlich. Durch entsprechende Dimensionierung des Toleranzringes läßt sich einerseits und zuverlässig ein ungewolltes gegenseitiges Verdrehen der Einzelmuttern verhindern und andererseits das gewünschte Spiel bzw. Vorspannung bei relativ geringem Kraftaufwand durchführen, wobei einfache Werkzeuge wie Gabelschlüssel oder dergleichen eingesetzt werden können. Eine Spiel- bzw. Vorspannungseinstellung kann gegebenenfalls auch wiederholt durchgeführt werden. Ein weiterer erfindungsgemäßer Vorteil liegt darin, daß die Sitzkraft eines Toleranzringes wesentlich langsamer mit steigender Temperatur abfällt, als die Sitzkraft bei einer Preßpassung, so daß auch bei stark unterschiedlichen Betriebstemperaturen ein selbsttätiges Verdrehen der Einzelmuttern gegeneinander ausgeschlossen ist.

Aus der GB-A-1 471 711 ist es bekannt, die Einzelmuttern über einen Zwischenring zu koppeln, welcher beidseits jeweils mit Mitnahmeschlitzen versehen ist, in die radiale Schraubstifte der Einzelmuttern eingreifen. Bei dieser bekannten Anordnung können also die beiden Einzelmuttern nur in bestimmten diskreten Winkelstellungen relativ zueinander eingestellt werden, so daß eine Feinsteinstellung des Spiels oder der Vorspannung nicht möglich ist. Auch ist der Fertigungsaufwand relativ hoch.

Aus der GB-A-1 293 430 ist es bekannt, gegeneinander unverdrehbar in einem Gehäuse gelagerte Einzelmuttern mittels eines keilartigen Zwischenteils voneinander weg zu bewegen, um hierdurch eine gewünschte Vorspannung zu erhalten. Hierbei wird das Zwischenteil mittels einer im Gehäuse gelagerten, radial zur Spindelachse verlaufenden Schraube verschoben. Der radiale Raumbedarf dieses bekannten Schraubtriebs ist daher relativ hoch; dieser Schraubtrieb ist zudem aufwendig in der Herstellung.

Bei dem aus der DE-A-1 936 546 bekannten Schraubtrieb ist eine der beiden Einzelmuttern unverdrehbar und die andere verdrehbar in einem Gehäuse gelagert. Letztere Einzelmutter ist mit einer äußeren Schneckenradverzahnung versehen, in die eine im Gehäuse gelagerte, als Schnecke ausgebildete Spannschraube eingreift. Ein Verdrehen der Spannschraube hat eine Drehung der einen Einzelmutter gegenüber der anderen zur Folge unter Beibehaltung ihres gegenseitigen axialen Abstandes. Über die Gewindespindel, in die die Gänge bzw. die Kugeln der Doppelmuttern nach wie vor eingreifen, entsteht daher eine mehr oder weniger große axiale Zug- oder Druckspannung, so daß ein gewünschtes Spiel, beispielsweise ein Nullspiel bzw. eine gewünschte Vorspannung der Doppelmutter auf der Gewindespindel eingestellt werden kann. Die Herstellungskosten dieses Schraubtriebs sind jedoch aufgrund des erforderlichen Schneckenradantriebs und des genau zu fertigenden Gehäuses relativ hoch. Zudem sind die radialen Abmessungen des Schraubtriebs aufgrund des die Spannschraube aufnehmenden Gehäuses relativ groß.

Erfindungsgemäß wird weiterhin vorgeschlagen, daß zumindest eine der den Ringraum begrenzenden Umfangsflächen eine Innenumfangsfläche einer der Einzelmuttern ist. In diesem Falle ist der Zwischenring ebenfalls innerhalb der Einzelmuttern angeordnet, so daß kein der Verbindung der beiden Einzelmuttern dienendes Teil über den Außenumfang der Einzelmuttern radial nach außen ragt.

Die Innenumfangsfläche läßt sich in einfacher Weise dadurch herstellen, daß man an einem Ende der Einzelmutter eine zylindrische Ausdrehung vorsieht.

Eine mechanisch robuste und dennoch kostengünstig fertigbare Ausführungsform verwendet den zur Doppelmutter koaxialen Stützring, an dem eine der den Ringraum begrenzenden Umfangsflächen ausgebildet ist. Neben der Abstützung des oder der Zwischenringe kann der Stützring auch noch zur Zentrierung der beiden Einzelmuttern dienen.

Zur Halterung und Zentrierung des oder der Zwischenringe wird vorgeschlagen, im Stützring mindestens eine äußere Ringnut zur Aufnahme je eines Zwischenrings vorzusehen. Hierbei ist es zweckmäßig, wenn die mit umlaufenden, flachen Rändern ausgebildeten axialen Enden des bzw. der Zwischenringe am Stützring anliegen.

In einer besonders einfachen Ausführungsform ist ein einziger Zwischenring vorgesehen, der sich einerseits am Stützring und andererseits an beiden Einzelmuttern abstützt. Die erforderliche kraftschlüssige Verbindung zwischen den Einzelmuttern ist gegeben, da die Wellen des Zwischenrings sich unter überwiegend elastischer Verformung jeweils an beiden Einzelmuttern kraftschlüssig anlegen.

Sofern der erforderliche Bauraum in axialer Richtung vorhanden ist, können auch zwei Zwischenringe eingesetzt werden, die sich einerseits beide am Stützring und andererseits jeweils an einer der Einzelmuttern abstützen.

Ein Stützring erübrigt sich, wenn der Ringraum zur Aufnahme des Zwischenrings von zwei ineinander übergehenden, axialen Einstichen in den aneinander anliegenden, radialen Endflächen der Einzelmuttern gebildet ist. Der Ringraum kann jedoch auch in einer alternativen Ausführungsform von der Innenumfangsfläche der einen Einzelmutter und von einer Außenumfangsfläche der anderen Einzelmutter begrenzt sein. Die Herstellung der Außenumfangsfläche gestaltet sich besonders einfach, wenn diese an einem durchmesserverringerten, zylindrischen Absatz an einem der Enden der anderen Einzelmutter ausgebildet ist.

Die Montage wird dadurch erleichtert, daß zumindest an einem der Teilmuttern und/oder am Stützring eine abgeschrägte oder abgerundete Einweisungsfläche für den Zwischenring ausgebildet ist.

Die Erfindung wird im folgenden an mehreren Ausführungsbeispielen erläutert. Es zeigt

Fig. 1 eine Seitenansicht eines Kugelschraubtriebs mit einer teilweise geschnitten dargestellten ersten Ausführungsform einer erfindungsgemäßen Doppelmutter in montiertem Zustand;

Fig. 2 eine Ansicht entsprechend Fig. 1 mit einer zweiten Ausführungsform der Doppelmutter;

Fig. 3 eine Draufsicht auf einen Zwischenring;

Fig. 4A bis 4C Seitenansichten im Schnitt weiterer Ausführungsform der Doppelmutter jedoch vor dem Zusammenbau;

Fig. 5A und 5B Seitenansichten im Schnitt weiterer Ausführungsformen der Doppelmutter in montiertem Zustand.

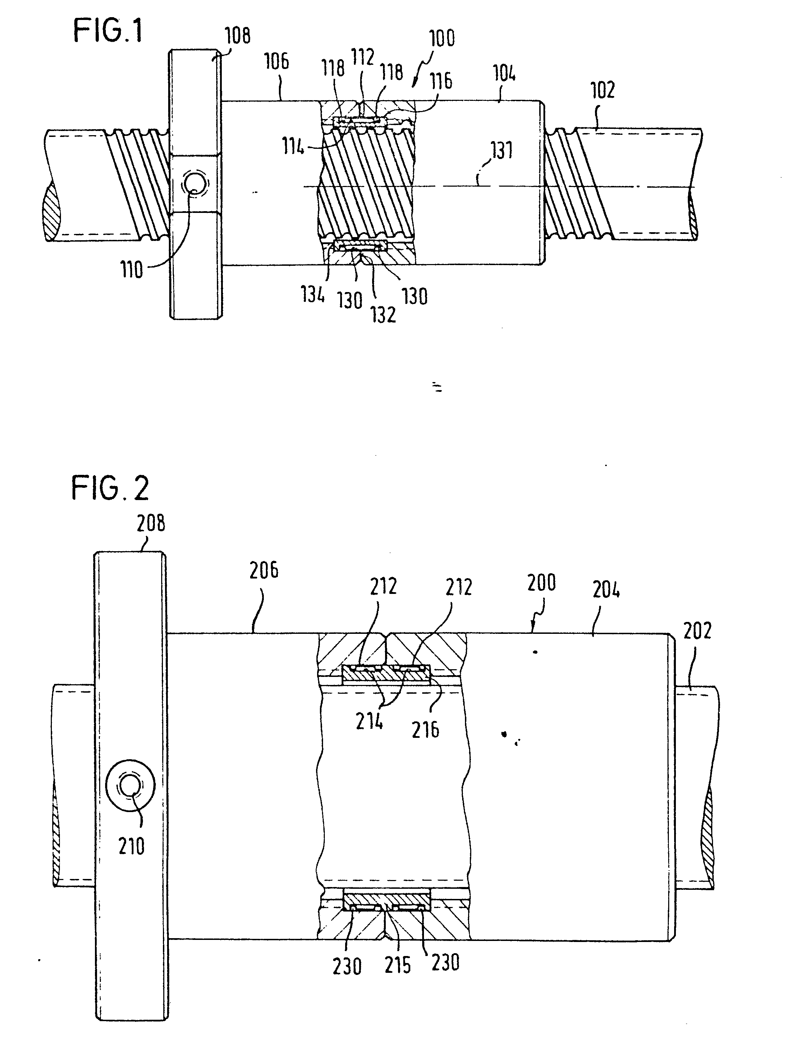

In den Fig. 1 bis 5B sind Doppelmuttern gezeigt, die jeweils über einen bzw. zwei Toleranzringe derart drehfest miteinander verbunden sind, daß zwar eine gewollte Verdrehung der Einzelmuttern gegeneinander zur Einstellung eines bestimmten reduzierten Spiels oder einer Vorspannung auf der Gewindespindel möglich ist, eine selbsttätige, ungewollte Verstellung während des Betriebes jedoch praktisch ausgeschlossen ist.

Die in Fig. 1 dargestellte, mit 100 bezeichnete Ausführungsform einer Doppelmutter läuft auf einer Kugelgewindespindel 102. Die Doppelmutter 100 besteht aus zwei Einzelmuttern, der in Fig. 1 rechten Einzelmutter 104 und der Einzelmutter 106. Letztere Einzelmutter 106 ist an ihrem linken Ende mit einem durchmesservergrößerten Flansch 108 zur Befestigung der Doppelmutter 100 an Maschinenteilen ausgebildet. Am Flansch 108 ist ein Einschraubgewinde 110 für einen nicht dargestellten Schmiernippel eingebohrt. Um das Schmiermittel innerhalb der Doppelmutter 100 zu halten, ist an beiden axialen Enden der Doppelmutter 100 jeweils ein nicht dargestellter Dichtring angebracht, der mit der Gewindespindel 102 zusammenwirkt.

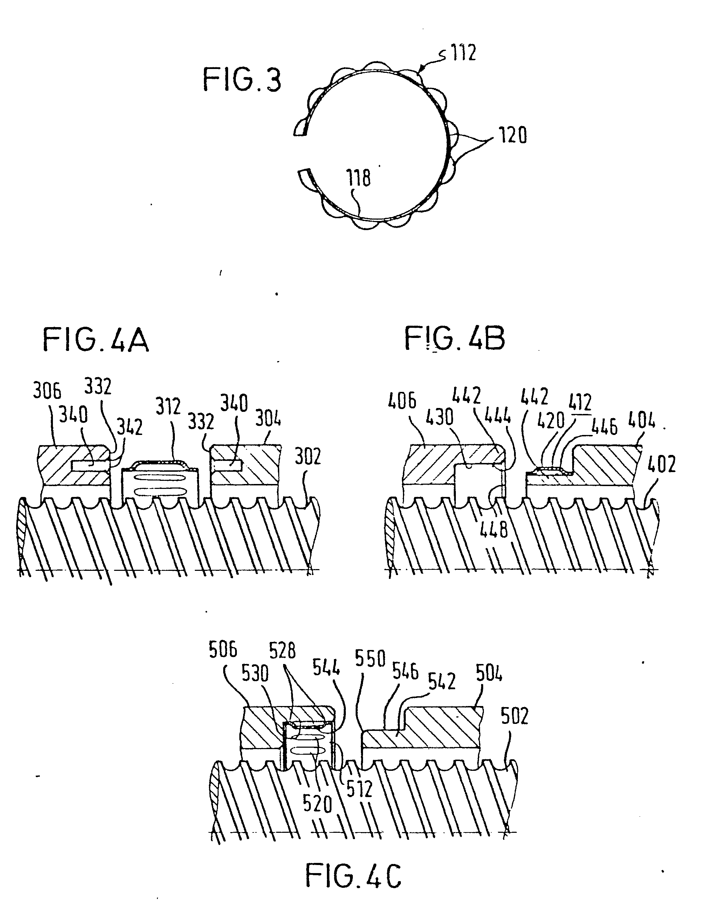

Die drehmomentschlüssige Verbindung zwischen den Einzelmuttern 104 und 106 wird über einen gewellten, federnden Zwischenring 112 erzielt, welcher in einer äußeren Ringnut 114 eines Stützrings 116 eingesetzt ist. Als Zwischenring kommt einer der handelsüblichen, zur Herstellung kraftschlüssiger Verbindungen zwischen Maschinenelementen eingesetzten Toleranzringe in Frage. Ein derartiger Toleranzring ist in den Fig. 1 und 3 dargestellt. Er besteht aus einem im wesentlichen zylindrischen, geschlitzten Ring, der, über seinen Umfang verteilt, mit einer Vielzahl von Auswölbungen 120 versehen ist. Bei dem dargestellten Toleranzringtypus liegt der an beiden axialen Enden des Rings 112 ausgebildete, umlaufende, flache Rand 118 am Innendurchmesser des Rings 112. Bei den Ausführungsformen nach den Fig. 1, 2, 4A und 4B wird ein derartiger Toleranzring 112 eingesetzt. Lediglich in der in Fig. 4C abgebildeten Ausführungsform wird ein Toleranzring 512 verwendet, dessen umlaufende flache Ränder 528 am Außendurchmesser des Rings 512 liegen.

Bei der in Fig. 1 gezeigten Doppelmutter 100 liegt der einzige Toleranzring 112 mit seinen Auswölbungen 120 an beiden Einzelmuttern 104 und 106 an, nämlich jeweils an einer Innenumfangsfläche 130 einer zur Doppelmutternachse 131 zentrischen zylindrischen Ausdrehung an beiden, einander zugewandten Enden, der Einzelmuttern 104 und 106. Die Innenumfangsflächen 130 haben genau gleichen Durchmesser und gehen ineinander über, da die beiden Einzelmuttern 104 und 106 mit radialen Endflächen 132 aneinander anliegen. Der Durchmesser der Innenumfangsflächen 130 ist derart mit dem Außendurchmesser des Stützrings 116 abgestimmt, daß sich ein leichter Schiebesitz ergibt, und somit eine Zentrierung der Einzelmuttern 104 und 106 erreicht wird. Der Innendurchmesser des Stützrings 116 ist etwas größer gewählt als der Außendurchmesser der Gewindespindel 102, so daß es während des Betriebes zu keinerlei Kontakt zwischen beiden Teilen kommt. Die Wandstärke des Stützrings 116 ist derart festgelegt, daß sich trotz der Ringnut 114 noch ausreichende Stabilität ergibt, wobei die Wölbungen 120 des Toleranzringes 122 dem gewünschten Anpreßdruck entsprechend über die Randstege der Ringnut 114 radial nach außen vorstehen. Die notwendige Wandstärke des Stützrings 116 kann im Vergleich zur Wandstärke der Einzelmuttern 104 und 106 relativ klein gewählt werden, so daß nur eine relativ schwache Ausdrehung zur Bildung der Innenumfangsflächen 130 an jeder Einzelmutter 104 vorgenommen werden muß. Auf jeden Fall ist es nicht notwendig, die Wandstärke der Einzelmuttern 104 und 106 zu vergrößern, um Raum für den Einbau von Stützring 116 und Toleranzring 122 zu schaffen. Bei der in den Fig. 1 und 2 gezeigten speziellen Ausführungsform einer Doppelmutter ist herstellungsbedingt von vornherein bereits eine derartige, mit 118 bezeichnete Ausdrehung an beiden Enden jeder Einzelmutter vorgesehen. Die axiale Länge der Innenumfangsflächen 130 ist jeweils geringfügig größer als die Hälfte der axialen Länge des Stützrings 116, damit die Einzelmuttern 104 und 106 im zusammengebauten Zustand an den relativ großen radialen Endflächen aneinander anliegen. Die bei einer starken Vorspannung der Doppelmutter 100 auftretenden relativ hohen axialen Schubkräfte können, ohne zu Verformungen zu führen, zwischen beiden Einzelmuttern 104 und 106 wirken.

Zum Zusammenbau und Einstellen der Doppelmutter 110 werden zunächst die beiden Einzelmuttern 104 und 106 mit dazwischenliegendem Stützring 116 einzeln auf die Gewindespindel 102 aufgeschraubt. Anschließend werden die beiden Einzelmuttern 104 und 106 durch entsprechendes Verdrehen auf der Gewindespindel 102 einander genähert, bis schließlich der Stützring 116 in beide Ausnehmungen eingreift und die Auswölbungen 120 des Toleranzrings 112 an den Innenumfangsflächen 130 andrücken. Neben einer elastischen Verformung des Toleranzrings 112 kommt es auch zur mehr oder weniger starken plastischen Verformung der einzelnen Auswölbungen 120 und damit zu einer Anpassung des Außenumfangs der entsprechenden Abschnitte des Toleranzrings 112 an die jeweiligen Innenumfangsflächen der beiden Einzelmuttern 104 und 106. Selbst dann, wenn die Innenumfangsflächen 130 nicht exakt gleichen Durchmesser haben, ist daher ein zuverlässiger Kraftschluß zwischen den Einzelmuttern 104 und 106 über den Toleranzring 112 gegeben. Im zusammengebauten Zustand fällt die axiale Mitte von Toleranzring 112 und Stützring 116 im wesentlichen in die Berührungsebene beider Einzelmuttern 104 und 106, da die axialen Längen der Innenumfangsflächen 130 und des Stützrings 116, wie beschrieben, aufeinander abgestimmt sind. An dem von der radialen Endfläche 130 fernen Rand jeder Innenumfangsfläche 130 ist jeweils eine radial nach innen gerichtete Ringstufe 134 gebildet, die den Stützring 116 in Zentrierstellung bringt.

Die beiden an ihren radialen Endflächen 132 aneinander anliegenden Einzelmuttern 104 und 106 werden nun der gewünschten Einstellung des Spiels oder einer Vorspannung entsprechend weiter gegeneinander verdreht. Falls dabei größere Drehmomente aufzubringen sind, können die beiden Einzelmuttern 104 und 106 in entsprechende Werkzeuge unter Herstellung einer reibungsschlüssigen oder formschlüssigen Verbindung zwischen den Einzelmuttern 104 und 106 und den jeweiligen Werkzeugen eingesetzt werden. Zur genauen Einstellung einer Vorspannung der Doppelmutter 100 können Drehmomentwerkzeuge eingesetzt werden. Wenn die gewünschte Einstellung erreicht ist, werden die Werkzeuge wieder demontiert. Aufgrund des eingespannten Toleranzrings 112 behalten die Einzelmuttern 104 und 106 ihre eingestellte Drehstellung bei.

Die Drehstellung der beiden Einzelmuttern 104 und 106 zueinander kann jedoch bei Bedarf auch wieder abgeändert werden. Bei einer Demontage der Doppelmutter 100 ist bei großer Vorspannung zuerst diese Vorspannung zu beseitigen. Bei geringer Vorspannung oder verschwindender Vorspannung und bestimmter Einstellung des Spiels kann die Doppelmutter unverändert demontiert und wieder montiert werden, da die beiden Einzelmuttern 104 und 106 zuverlässig durch den Toleranzring 122 zusammengehalten werden. In diesem Falle kann auch eine Vormontage der Doppelmutter 100 unter Einstellung der gewünschten Drehstellung vorgenommen werden.

In der Ausführungsform nach Fig. 2 sind analoge Teile mit gleichen Bezugszeichen versehen wie in Fig. 1, jeweils vermehrt um die Zahl 100. Die Ausführungsform nach Fig. 2 unterscheidet sich von der nach Fig. 1 lediglich dadurch, daß zwei Toleranzringe 212 vorgesehen sind, von denen jeweils einer mit einer der beiden Einzelmuttern 202 und 206 zusammenwirkt. Die beiden Toleranzringe 212 sind in jeweils eine äußere Ringnut 214 des Stützrings 216 eingesetzt. Die beiden Ringnuten 214 sind durch einen Umfangssteg 215 in der Berührungsebene der beiden Einzelmuttern 204 und 206 voneinander getrennt. Die beiden Toleranzringe 212 liegen daher jeweils an der Innenumfangsfläche 230 der einen oder der anderen Einzelmutter 204 und 206 an. Der axiale Raumbedarf für den Stützring 216 ist im Vergleich zur Ausführungsform nach Fig. 1 etwas größer; die mechanische Stabilität der Ausführungsform nach Fig. 2 ist jedoch größer. Es lassen sich auch für die eine Verdrehung erforderlichen Drehmomente exakter vorherbestimmen.

In den Fig. 4A, 4B und 4C sind weitere Ausführungsformen dargestellt, wobei analoge Teile mit gleichen Bezugszeichen versehen sind wie in Fig. 1, jeweils vermehrt um die Zahl 200 (Fig. 4A, 300 (Fig. 4B) bzw. 400 (Fig. 4C).

Den in den Fig. 4A bis 4C gezeigten Ausführungsformen gemeinsam ist, daß diese ohne Stützring auskommen. Zur Aufnahme des Stützrings 312 bei der in Fig. 4A gezeigten Ausführungsform ist in den beiden radialen Endflächen 332 der Einzelmuttern 304 und 306 jeweils ein axialer Einstich 340 in Form einer axialen Ringnut eingearbeitet. Die beiden Einstiche 340 liegen einander genau gegenüber und sind in ihren Abmessungen an die Abmessungen des Toleranzringes 312 angepaßt. Die in radialer Richtung gemessene Breite der Einstiche 340 ist demnach etwas geringer als die Einbaudicke des Toleranzringes 312; die axiale Tiefe der Einstiche 340 ist jeweils geringfügig größer als die halbe axiale Länge des Toleranzringes 312. Um die Montage zu erleichtern, sind die Kanten der Einstiche 340 an der radialen Endfläche 332 mit Abschrägungen 342 ausgebildet. Zum Zusammenbau der Doppelmutter werden die Einzelmuttern 304 und 306 mit dazwischen angeordnetem Toleranzring 312 auf die Gewindespindel 302 einzeln aufgeschraubt (siehe Fig. 4A) und anschließend derart gegeneinander verdreht, daß sie schließlich zur gegenseitigen Anlage an den radialen Flächen 332 kommen, wobei der Toleranzring 312 von den Einstichen 340 aufgenommen wird. Durch die radiale Einspannung des Toleranzringes 312 in den Einstichen 340 wird die erwünschte drehmomentschlüssige Verbindung zwischen beiden Einzelmuttern 304 und 306 erreicht.

Bei den in den Fig. 4B und 4C gezeigten Ausführungsformen ist an einer der Einzelmuttern, z. B. der rechten Einzelmutter 404 bzw. 504 durch entsprechendes Abdrehen ein durchmesserverringerter, zylindrischer Absatz 442 bzw. 542 ausgebildet. An der anderen Einzelmutter 406 bzw. 506 ist eine vom Innenumfang ausgehende Ausdrehung 444 bzw. 544 ähnlich der in den Fig. 1 und 2 ausgeformt, deren Innenumfangsfläche 430 bzw. 530 der Außenumfangsfläche 446 bzw. 546 des Absatzes 442 bzw. 542 im zusammengebauten Zustand unter Bildung eines Ringraumes gegenüberliegt. Die axialen Längen der Innenumfangsflächen 430 bzw. 530 und der Außenumfangsflächen 446 bzw. 546 sind im wesentlichen gleich groß, jedoch etwas größer als die axiale Länge des vom Ringraum aufzunehmenden Toleranzringes 412 bzw. 512. Innerhalb des so gebildeten Ringraumes steht der jeweilige Toleranzring 412 bzw. 512 wiederum unter radialer Vorspannung, so daß sich die gewünschte kraftschlüssige Verbindung zwischen beiden Einzelmuttern 404 bzw. 504 und 406 bzw. 506 ergibt.

Bei der in Fig. 4B gezeigten Ausführungsform hat der Toleranzring 412 eine Form entsprechend Fig. 3. Um den Zusammenbau zu erleichtern, wird der Toleranzring 412 vor dem Zusammenbau auf den Absatz 442 geschoben. Beim Zusammenbau kann dann die gegebenenfalls mit einer Abschrägung 442 versehene Vorlaufkante 448 der Ausdrehung auf die abgerundeten Auswölbungen 420 des Toleranzrings 412 auflaufen.

Bei der in Fig. 4C gezeigten Ausführungsform ist der Toleranzring 512 jedoch mit umlaufenden flachen Rändern 528 versehen, die am Außendurchmesser des Toleranzringes 512 verlaufen. Dementsprechend wird dieser Toleranzring 512 vor dem Zusammenbau in die Ausdrehung 544 eingesetzt (siehe Fig. 4C). Der Zusammenbau bereitet auch hier keine Schwierigkeiten, da die Vorlaufkante 550 des Absatzes 542 wiederum auf die abgerundeten Auswölbungen 520 trifft.

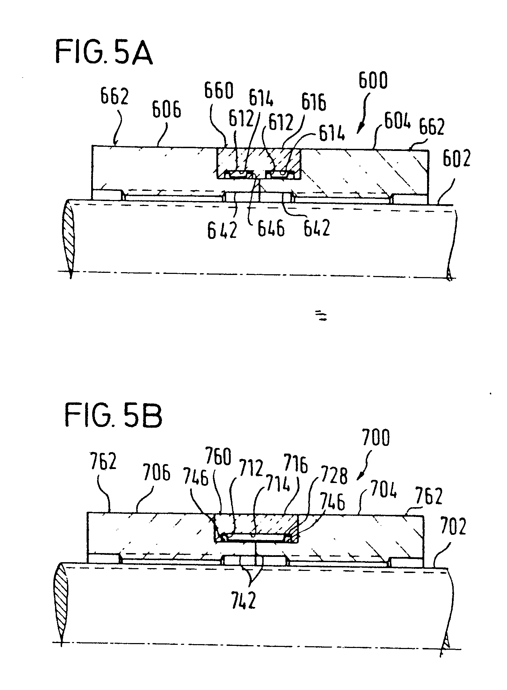

In den Fig. 5A und 5B sind weitere Ausführungsformen angegeben, wobei analoge Teile mit den gleichen Bezugsziffern versehen sind wie in Fig. 1, jeweils vermehrt um die Zahl 500 bzw. 600.

Die in Fig. 5A und 5B gezeigten montierten Doppelmuttern 600 bzw. 700 entsprechen in ihrem Aufbau den in den Fig. 2 bzw. Fig. 1 gezeigten Doppelmuttern 200 bzw. 100 mit dem Unterschied, daß die Toleranzringe 612 bzw. 712 in innere Ringnuten 614 bzw. 714 der Stützringe 616 bzw. 716 eingesetzt sind und an Außenumfangsflächen 646 bzw. 746 der Einzelmuttern 604, 606 bzw. 704, 706 anliegen. Bei der Doppelmutter 600 sind entsprechend der Doppelmutter 200 zwei Toleranzringe 612 eingesetzt, bei der Doppelmutter 700 entsprechend der Doppelmutter 100 lediglich ein Toleranzring 712. Die Außenumfangsflächen 646 bzw. 746 sind ähnlich wie bei der in Fig. 4C dargestellten Einzelmutter 504 an durchmesserverringerten zylindrischen Ansätzen 647 bzw. 742 ausgebildet. Die Außenumfangsflächen 660 bzw. 760 der Stützringe 616 bzw. 716 schließen bündig ab mit den Außenumfangsflächen 662 bzw. 762 der Einzelmuttern 604, 606 bzw. 704, 706, so daß auch bei diesen Bauformen in radialer Richtung für die Mutternverbindung kein zusätzlicher Bauraum erforderlich ist. Wie aus Fig. 5B ersichtlich, liegen die umlaufenden, flachen Ränder 728 des Toleranzrings 712 am Stützring 716 an, um, wie bereits anhand von Fig. 4C erläutert wurde, den Zusammenbau zu erleichtern.

Die im vorstehenden erläuterten Doppelmutterverbindungen unter Verwendung eines oder mehrerer Toleranzringe lassen sich bei Kugelgewindemuttern beliebigen inneren Aufbaus oder auch bei herkömmlichen Muttern mit normalen Innengewinde mit Erfolg einsetzen.

## Patentansprüche

1. Schraubtrieb, insbesondere Kugelschraubtrieb, mit einer Gewindespindel (102; 202; . . . 702) und einer auf der Gewindespindel laufenden Doppelmutter (100; 200; 600; 700), deren beide Einzelmuttern (104, 106; 204, 206; . . . 704, 706) zur Einstellung eines gewünschten Spiels bzw. einer gewünschten Vorspannung auf der Gewindespindel gegeneinander kontinuierlich verdrehbar und zur Verhinderung einer selbsttätigen gegenseitigen Verdrehung über wenigstens einen an einer Umfangsfläche (130; 230; 340; 430; 530; 646; 746) der einen und/oder der anderen Einzelmutter unter radialer Vorspannung anliegenden Zwischenring miteinander reibungskraftschlüssig verbunden sind, dadurch gekennzeichnet, daß der Zwischenring als gewellter Toleranzring (112, . . . 712) mit federnd nachgiebiger radialer Ringstärke ausgebildet und in einem Ringraum radial eingespannt ist, der in radialer Richtung von Umfangsflächen der Einzelmuttern allein oder von Umfangsflächen der Einzelmuttern und eines zwischen diesen angeordneten Stützrings (116; 216; 616; 716) begrenzt ist.

2. Schraubtrieb nach Anspruch 1, dadurch gekennzeichnet, daß zumindest eine der den Ringraum begrenzenden Umfangsflächen eine Innenumfangsfläche (130) einer der Einzelmuttern (104, 106) ist.

3. Schraubtrieb nach Anspruch 2, dadurch gekennzeichnet, daß die Innenumfangsfläche (130) an einer zylindrischen, an einem Ende der einen Einzelmutter (104, 106) vorgesehenen Ausdrehung ausgebildet ist.

4. Schraubtrieb nach einem der Ansprüche 1 bis 3, dadurch gekennzeichnet, daß eine der den Ringraum begrenzenden Umfangsflächen an dem zur Doppelmutter (100; 200) koaxialen Stützring (116; 216) ausgebildet ist.

5. Schraubtrieb nach den Ansprüchen 2 und 4, dadurch gekennzeichnet, daß der Ringraum in radialer Richtung von einer Außenumfangsfläche des Stützrings (116; 216) begrenzt ist.

6. Schraubtrieb nach den Ansprüchen 1 und 4, dadurch gekennzeichnet, daß der Ringraum in radialer Richtung von einer Außenumfangsfläche (646; 746) der einen und/oder der anderen Einzelmutter (604, 606; 704, 706) und einer Innenumfangsfläche (614; 714) des Stützrings (616; 716) begrenzt ist.

7. Schraubtrieb nach Anspruch 5 oder 6, dadurch gekennzeichnet, daß im Stützring (116; 216) mindestens eine Ringnut (114; 214; 614; 714) zur Aufnahme je eines Zwischenrings (112; 212; 612; 712) vorgesehen ist.

8. Schraubtrieb nach Anspruch 7, dadurch gekennzeichnet, daß die mit umlaufenden, flachen Rändern (118; 718) ausgebildeten axialen Enden des bzw. der Zwischenringe (112; 212; 612; 712) am Stützring (116; 216; 616; 716) anliegen.

9. Schraubtrieb nach einem der Ansprüche 4 bis 8, gekennzeichnet durch einen einzigen Zwischenring (112; 712), der sich einerseits am Stützring (116; 716) und andererseits an Umfangsflächen der beiden Einzelmuttern (104, 106; 704, 706) abstützt (Fig. 1; Fig. 5B).

10. Schraubtrieb nach einem der Ansprüche 4 bis 8, gekennzeichnet durch zwei Zwischenringe (212; 612), die sich einerseits beide am Stützring (216; 616) und andererseits jeweils an einer Umfangsfläche einer der Einzelmuttern (204 bzw. 206; 604 bzw. 606) abstützen (Fig. 2; Fig. 5A).

11. Schraubtrieb nach Anspruch 2 oder 3, dadurch gekennzeichnet, daß der Ringraum zur Aufnahme des Zwischenrings (312) von zwei ineinander übergehenden, axialen, ringförmigen Einstichen (340) in den aneinander anliegenden, radialen Endflächen (332) der Einzelmuttern (304, 306) gebildet ist (Fig. 4A).

12. Schraubtrieb nach Anspruch 2 oder 3, dadurch gekennzeichnet, daß der Ringraum zur Aufnahme des Zwischenrings (412; 512) von einer Innenumfangsfläche (430) der einen Einzelmutter (406) und von einer Außenumfangsfläche (446) der anderen Einzelmutter (404) begrenzt ist (Fig. 4B und 4C).

13. Schraubtrieb nach Anspruch 6 oder 12, dadurch gekennzeichnet, daß die Außenumfangsfläche (446) der Einzelmutter (404; 604, 606; 704, 706) an einem durchmesserverringerten, zylindrischen Absatz (442; 542; 642) an einem der Enden der Einzelmutter (404; 604, 606; 704, 706) ausgebildet ist.

14. Schraubtrieb nach einem der Ansprüche 1 bis 13, dadurch gekennzeichnet, daß zumindest an einer der Einzelmuttern (304, 306) und/oder am Stützring eine abgeschrägte oder abgerundete Einweisungsfläche (342) für den Zwischenring (312) ausgebildet ist.

## Claims

1. Worm drive, especially ball worm drive, having a threaded spindle (102; 202; . . . 702) and a double nut (100; 200; 600; 700) running on the threaded spindle, the two individual nuts (104, 106; 204, 206; . . . 704, 706) of which double nut are continuously rotatable in relation to one another on the threaded spindle for the setting of a desired play or a desired initial stress and are connected with one another under friction force locking through at least one intermediate ring bearing under radial initial stress on a circumferential surface (130; 230; 340; 430; 530; 646; 746) of the one and/or the other individual nut, for the prevention of a self-effected mutual rotation, characterised in that the intermediate ring is made as a corrugated tolerance ring (112, ... 712) with resiliently yieldable radial ring thickness and is clamped radially in a ring space which is limited in the radial direction by circumferential surfaces of the individual nuts alone or by circumferential surfaces of the individual nuts and of a support ring (116; 216; 616; 716) arranged between these nuts.

2. Worm drive according to claim 1, characterised in that at least one of the circumferential surfaces limiting the ring space is an internal circumferential surface (130) of one of the individual nuts (104, 106).

3. Worm drive according to claim 2, characterised in that the internal circumferential surface (130) is formed on a cylindrical turned recess provided at one end of the one individual nut (104, 106).

4. Worm drive according to one of claims 1 to 3, characterised in that one of the circumferential surfaces limiting the ring space is formed on the support ring (116; 216) coaxial with the double nut (100; 200).

5. Worm drive according to claims 2 and 4, characterised in that the ring space is limited in the radial direction by an external circumferential surface of the support ring (116; 216).

6. Worm drive according to claim 1 and 4, characterised in that the ring space is limited in the radial direction by an external circumferential surface (646; 746) of the one and/or the other individual nut (604, 606; 704, 706) and an internal circumferential surface (614; 714) of the support ring (616; 716).

7. Worm drive according to claim 5 or 6, characterised in that in the support ring (116; 216) there is provided at least one ring groove (114; 214; 614; 714) for the reception of an intermediate ring (112; 212; 612; 712) each.

8. Worm drive according to claim 7, characterised in that the axial ends, formed with surrounding flat edges (118; 728), of the intermediate ring or rings (112; 212; 612; 712) rest on the support ring (116; 216; 616; 716).

9. Worm drive according to one of claims 4 to 8, characterised by a single intermediate ring (112; 712) which is supported for one part on the support ring (116; 716) and for the other part on circumferential surfaces of the two individual nuts (104, 106; 704, 706) (figure 1; figure 5B).

10. Worm drive according to one of claims 4 to 8, characterised by two intermediate rings (212; 612) which are supported for the one part both on the support ring (216; 616) and for the other part each on one circumferential surface of one of the individual nuts (204 and 206; 604 and 606) (figure 2; figure 5A).

11. Worm drive according to claim 2 or 3, characterised in that the ring space for the reception of the intermediate ring (312) is formed by two axial, annular incisions (340), merging into one another, in the mutually abutting radial end faces (332) of the individual nuts (304, 306) (figure 4A).

12. Worm drive according to claim 2 or 3, characterised in that the ring space for the reception of the intermediate ring (412; 512) is limited by an internal circumferential surface (430) of the one individual nut (406) and by an external circumferential surface (446) of the other individual nut (404) (figures 4B and 4C).

13. Worm drive according to claim 6 or 12, characterised in that the external circumferential surface (446) of the individual nut (404; 604, 606; 704, 706) is formed on a cylindrical shoulder (442; 542; 642) of reduced diameter on one of the ends of the individual nut (404; 604, 606; 704, 706).

14. Worm drive according to one of claim 1 to 13, characterised in that a bevelled or rounded guide-in face (342) for the intermediate ring (312) is formed at least on one of the individual nuts (304, 306) and/or on the support ring.

**Revendications**

1. Mécanisme à vis et écrou, en particulier mécanisme à vis et écrou à billes, comprenant une broche filetée (102; 202; ... 702) et un double écrou (100; 200; 600; 700) tournant sur la broche filetée, dont les deux écrous individuels (104, 106; 204, 206; ... 704, 706) peuvent être tournés de façon continue l'un par rapport à l'autre pour déterminer un jeu désiré ou une précontrainte désirée sur la broche filetée et son appliqués l'un contre l'autre à force pour éviter leur rotation mutuelle automatique au moyen d'au moins une bague intermédiaire s'appliquant sous une précontrainte radiale sur une surface périphérique (130; 230; 340; 530; 646; 746) de l'un et/ou de l'autre écrou individuel, caractérisé en ce que la bague intermédiaire est constituée sous forme d'une bague de tolérance ondulée (112; ... 712) dont l'épaisseur radiale peut se modifier élastiquement et qui est serrée radialement dans une enceinte annulaire limitée en direction radiale par les surfaces périphériques des écrous individuels seulement ou par les surfaces périphériques des écrous individuels et d'une bague d'appui (116; 216; 616; 716) disposée entre ces derniers.

2. Mécanisme à vis et à écrou selon la revendication 1, caractérisé en ce que l'une au moins des surfaces périphériques limitant l'enceinte annulaire est constituée par une surface périphérique interne (130) de l'un des écrous individuels (104, 106).

3. Mécanisme à vis et à écrou selon la revendication 2, caractérisé en ce que la surface périphérique interne (130) est constituée dans un évidement cylindrique prévu à une extrémité de l'un des écrous individuels (104, 106).

4. Mécanisme à vis et à écrou selon l'une des revendications 1 à 3, caractérisé en ce que l'une des surfaces périphériques limitant l'enceinte annulaire est constituée sur la bague d'appui (116; 216) coaxiale au double écrou (100; 200).

5. Mécanisme à vis et à écrou selon les revendications 2 et 4, caractérisé en ce que l'enceinte annulaire est limitée en direction radiale par une surface périphérique externe de la bague d'appui (116, 216).

6. Mécanisme à vis et à écrou selon les revendications 1 et 4, caractérisé en ce que l'enceinte annulaire est limitée en direction radiale par une surface périphérique externe (646; 746) de l'un et/ou de l'autre écrou individuel (604, 606; 704, 706) et par une surface périphérique interne (614; 714) de la bague d'appui (616; 716).

7. Mécanisme à vis et à écrou selon la revendication 5 ou 6, caractérisé en ce qu'une gorge annulaire (114; 214; 614; 714) au moins est prévue sur la bague d'appui (116; 216) pour y recevoir une bague intermédiaire respective (112; 212; 612; 712).

8. Mécanisme à vis et à écrou selon la revendication 7, caractérisé en ce que les extrémités axiales constituées par des bords (118; 728) plats et périphériques de la ou des bagues intermédiaires (112; 212; 612; 712) s'appliquent contere la bague d'appui (116; 216; 616; 716).

9. Mécanisme à vis et à écrou selon l'une quelconque des revendications 4 à 8, caractérisé par une unique bague intermédiaire (112; 712) qui s'appuie d'une part contre la bague d'appui (116; 716) et d'autre part contre les surfaces périphériques des deux écrous individuels (104, 106; 704, 706) (fig. 1, fig. 5b).

10. Mécanisme à vis et à écrou selon l'une quelconque des revendications 4 à 8, caractérisé par deux bagues intermédiaires (212, 612) qui s'appuient d'une part toutes les deux contre la bague d'appui (216; 616) et d'autre part respectivement contre une surface périphérique de l'un des écrous individuels (204 ou 206; 604 ou 606) (fig. 2; fig. 5A).

11. Mécanisme à vis et à écrou selon la revendication 2 ou 3, caractérisé en ce que l'enceinte annulaire destinée à la réception de la bague intermédiaire (312) est constituée par deux encoches (340) de forme annulaire, axiales, dans le prolongement l'une l'autre, constituées dans les surfaces d'extrémités radiales (332) et appliquées l'une contre l'autre des écrous individuels (304, 306) (fig. 4A).

12. Mécanisme à vis et à écrou selon la revendication 2 ou 3, caractérisé en ce que l'enceinte annulaire destinée à la réception de la bague intermédiaire (412; 512) est limitée par une surface périphérique interne (430) de l'un des écrous individuels (405) et par une surface périphérique externe (446) de l'autre écrou individuel (404) (fig. 4B et 4C).

13. Mécanisme à vis et à écrou selon la revendication 6 ou 12, caractérisé en ce que la surface périphérique externe (446) des écrous individuels (404; 604; 606; 704; 706) est constituée sur une saillie cylindrique (442; 542; 642) de diamètre réduit à l'une des extrémités des écrous individuels (404; 604, 606; 704, 706).

14. Mécanisme à vis et à écrou selon l'une quelconque des revendications 1 à 13, caractérisé en ce qu'une surface de guidage (342) arrondie ou biseautée et destinée à la bague intermédiaire (312) est constituée au moins sur l'un des écrous individuels (304, 306) et/ou sur la bague d'appui.

FIG.1

108 106 118 112 118 100 116 104 102

114

131

110

134 130 132 130

FIG. 2

208 206 212 212 200 204 202

214 216

210

230 215 230

FIG.3

FIG.4A

FIG.4B

FIG.4C

# FIG. 5A

# FIG. 5B